(19) Europäisches Patentamt / European Patent Office / Office européen des brevets

(11) EP 4 242 921 A1

(12) **DEMANDE DE BREVET EUROPEEN**

(43) Date de publication:
**13.09.2023 Bulletin 2023/37**

(21) Numéro de dépôt: **22305268.9**

(22) Date de dépôt: **10.03.2022**

(51) Classification Internationale des Brevets (IPC):
**G06N 3/04** *(2023.01)*    **G06N 3/08** *(2023.01)*
**G06T 7/11** *(2017.01)*    **G06V 10/774** *(2022.01)*
**G06V 10/82** *(2022.01)*    **G06V 20/70** *(2022.01)*

(52) Classification Coopérative des Brevets (CPC):
**G06V 20/70; G06N 3/045; G06N 3/082;
G06N 3/084; G06N 3/088; G06V 10/774;
G06V 10/82**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeurs:
• **BULL SAS
78340 Les Clayes-Sous-Bois (FR)**
• **Université Grenoble Alpes
38400 Saint-Martin-d'Hères (FR)**

• **Institut Polytechnique de Grenoble
38000 Grenoble (FR)**
• **Centre national de la recherche scientifique
75016 Paris (FR)**

(72) Inventeurs:
• **PAULETTO, Loïc
38000 GRENOBLE (FR)**
• **AMINI, Massih-Reza
38660 LA TERRASSE (FR)**

(74) Mandataire: **IPAZ
Parc Les Algorithmes, Bâtiment Platon
CS 70003 Saint Aubin
91192 Gif sur Yvette Cedex (FR)**

(54) **PROCÉDÉ, PROGRAMME D'ORDINATEUR ET DISPOSITIF D'ENTRAINEMENT D'UN RÉSEAU NEURONAL CONVOLUTIF À ARCHITECTURE DYNAMIQUE POUR LA SEGMENTATION SÉMANTIQUE D'IMAGE**

(57)    L'invention concerne un procédé (200) d'entrainement d'un réseau neuronal convolutif à architecture dynamique pour la segmentation sémantique d'images, comprenant une phase (102) d'auto-annotation d'images, pour constituer une base (B1), dite première base, d'images auto-annotées, comprenant les étapes suivantes :
- application (104) d'au moins une transformation à au moins une image source, et
-ajout (106), à chaque image transformée ainsi obtenue, d'une étiquette, dite première étiquette, correspondant à ladite transformation ;
ledit procédé (200) comprenant au moins une itération d'une phase (110) d'entrainement dudit réseau neuronal avec la première base d'images (B1), et une deuxième base d'images (B2) annotées avec une étiquette, dite deuxième étiquette, relative au contenu de ladite image.

Elle concerne également un programme d'ordinateur et un dispositif mettant en œuvre un tel procédé, et un réseau neuronal convolutif à architecture dynamique à apprentissage profond obtenu par un tel procédé.

FIG. 2

EP 4 242 921 A1

## Description

La présente invention concerne un procédé d'entrainement d'un réseau neuronal convolutif à architecture dynamique à apprentissage profond pour la segmentation sémantique d'image. Elle concerne également un programme d'ordinateur et un dispositif mettant en œuvre un tel procédé, et un réseau neuronal convolutif à architecture dynamique à apprentissage profond obtenu par un tel procédé.

Le domaine de l'invention est de manière générale le domaine de l'entrainement des réseaux neuronaux convolutifs à architecture dynamique à apprentissage profond pour la segmentation sémantique d'image.

## État de la technique

Dans de nombreux domaines, tels que la surveillance, il est très utile de réaliser une segmentation sémantique d'une image, c'est-à-dire d'extraire un masque permettant d'identifier et de découper finement chaque élément d'une image. La segmentation sémantique d'image peut être réalisée de manière automatisée par un réseau neuronal convolutif (ou CNN pour « Convolutional Neural Network » en anglais) à apprentissage profond. Le masque indique à quelle classe d'objet appartient chaque pixel de l'image.

Il existe des CNN à architecture fixe pour la segmentation sémantique d'image. Cependant, ces réseaux sont consommateurs en ressources d'exécution et sont limités en performance lorsque les données en entrées sont de nature changeante. Pour pallier ces inconvénients, des réseaux de neurones à architecture dynamique ont été développés, tel que celui décrit par Yanwei Li et al. dans le document « Learning Dynamic Routing for Semantic Segmentation », accessible ici https://arxiv.org/pdf/2003.10401.pdf.

Dans un CNN à architecture dynamique, le routage des données au sein du réseau est dynamique et change en fonction de l'image d'entrée. Ainsi, le CNN s'adapte aux images données en entrée de sorte qu'il présente de meilleures performances de segmentation sémantique tout en nécessitant moins de ressources d'exécution.

Cependant, l'entrainement d'un réseau neuronal convolutif à architecture dynamique doit être réalisé de manière supervisée, ce qui est chronophage et consommateur en ressources, et en particulier en images annotées pour l'apprentissage.

Un but de la présente invention est de remédier à au moins un des inconvénients de l'état de la technique.

Un autre but de l'invention est de proposer une solution d'entrainement d'un réseau neuronal convolutif à architecture dynamique moins chronophage.

Il est aussi un but de l'invention de proposer une solution d'entrainement d'un réseau neuronal convolutif à architecture dynamique moins consommateur en ressources, et en particulier en images annotées pour l'entrainement.

## Exposé de l'invention

L'invention propose d'atteindre au moins l'un des buts précités par un procédé d'entrainement d'un réseau neuronal convolutif à architecture dynamique pour la segmentation sémantique d'images, ledit procédé comprenant une phase d'auto-annotation d'images, pour constituer une base, dite première base, d'images auto-annotées, ladite phase d'auto-annotation comprenant les étapes suivantes :

- application d'au moins une transformation à au moins une image source, et
- ajout, à chaque image transformée ainsi obtenue, d'une étiquette, dite première étiquette, correspondant à ladite transformation ;

ledit procédé comprenant au moins une itération d'une phase d'entrainement dudit réseau neuronal comprenant les étapes suivantes :

- entrainement, dit auto-supervisé, dudit réseau neuronal avec la première base d'images, fournissant une erreur, dite d'apprentissage auto-supervisé,
- entrainement supervisé dudit réseau neuronal avec une deuxième base d'images annotées avec une étiquette, dite deuxième étiquette, relative au contenu de ladite image, fournissant une erreur, dite d'apprentissage supervisé, et
- mise à jour d'au moins paramètre dudit réseau neuronal en fonction des erreurs obtenues.

Le procédé selon l'invention propose un entrainement semi-supervisé pour entrainer un réseau neuronal convolutif à architecture dynamique pour la segmentation sémantique d'image. En particulier, l'invention propose de construire de manière automatisée et autonome une base d'images auto-annotées. Cette base d'image auto-annotées est ensuite utilisée, en plus d'une base d'image préalablement annotées, pour entrainer le réseau neuronal convolutif. Ainsi, l'invention permet de diminuer le nombre d'images préalablement annotées nécessaires pour l'entrainement du réseau neuronal convolutif. Par conséquent, l'invention propose une solution d'entrainement d'un réseau neuronal convolutif à architecture dynamique moins chronophage et moins consommateur en ressources, et en particulier en images préalablement annotées pour l'entrainement. Le réseau neuronal convolutif entrainé obtenu par le procédé selon l'invention présentant une architecture dynamique, il propose de meilleures performances de segmentation sémantique tout en nécessitant moins de ressources d'exécution qu'un réseau neuronal convolutif à architecture fixe ou statique.

Dans la présente demande, la première base de données est composée d'images auto-annotées avec une première étiquette. Il est à noter que cette première étiquette n'a aucun rapport avec le contenu sémantique de l'image, et en particulier n'est pas un masque de segmentation. Elle indique uniquement la transformation appliquée à l'image. Ainsi, l'auto-annotation de chaque image lors de la phase d'auto-annotation est rapide, peu consommateur en ressources, et peut être réalisée de manière automatisée sans aucune intervention de la part d'un opérateur.

La deuxième base de données est composée d'images annotées par un opérateur avec une deuxième étiquette. En particulier, cette deuxième étiquette est un masque de segmentation sémantique indiquant pour chaque pixel de l'image la classe de l'objet auquel appartient ledit pixel. Cette deuxième étiquette est donc relative au contenu de l'image. Cette deuxième base d'images est constituée préalablement à l'exécution du procédé selon l'invention.

Par réseau neuronal convolutif à architecture dynamique, on entend un réseau neuronal convolutif comprenant plusieurs couches et plusieurs niveaux de convolution, et au sein duquel le chemin de propagation des données change en fonction des données d'entrée. Le chemin de propagation des données est changeant de sorte que, pour au moins un neurone d'au moins une couche, la sortie dudit neurone est dirigée sélectivement vers des neurones différents d'une couche suivante en fonction des données en entrée dudit réseau neuronal. En particulier, une fonction de routage, appelée « gate function » en anglais, génère une probabilité de routage pour chaque chemin possible entre un neurone d'une couche les neurones d'une couche suivante. La donnée de probabilité associée à chaque chemin est utilisée pour déterminer si ledit chemin est ouvert ou non, c'est-à-dire si ledit chemin doit être utilisé ou non. Ainsi, l'architecture du réseau neuronal s'adapte à chaque image donnée en entrée dudit réseau neuronal.

Suivant des modes de réalisation, les étapes d'entrainement auto-supervisé et d'entrainement supervisé peuvent être réalisées à tour de rôle.

Ainsi, une étape d'entrainement auto-supervisé peut être réalisée en utilisant les images de la première base. Pour ce faire, chaque image de la première base est fournie au réseau neuronal et une prédiction est obtenue pour chaque image de la première base. Pour chaque image, une erreur d'apprentissage auto-supervisé individuelle est calculée en fonction de la première étiquette associée à ladite image et de la sortie du réseau neuronal pour ladite image. L'erreur peut être une distance euclidienne ou cosinus entre la première étiquette et la sortie du réseau neuronal. En fonction des erreurs d'apprentissage auto-supervisé individuelles obtenues pour les images de la première base, une erreur d'apprentissage auto-supervisé est calculée pour toute la première base. Par exemple, l'erreur d'apprentissage auto-supervisé peut être égale à la moyenne des erreurs d'apprentissage auto-supervisé individuelles obtenues pour toutes les images de la première base.

Ensuite, une étape d'entrainement supervisé peut être réalisée en utilisant les images de la deuxième base. Pour ce faire, chaque image de la deuxième base est fournie au réseau neuronal et une prédiction est obtenue pour chaque image de la deuxième base. Pour chaque image, une erreur d'apprentissage supervisé individuelle est calculée en fonction de la deuxième étiquette associée à ladite image et de la sortie du réseau pour ladite image. L'erreur peut être une entropie-croisée entre la deuxième étiquette et la sortie du réseau neuronal convolutif. En fonction des erreurs d'apprentissage supervisé individuelles obtenues pour les images de la deuxième base, une erreur d'apprentissage supervisé est calculée pour l'ensemble de la deuxième base. Par exemple, l'erreur d'apprentissage supervisé peut être égale à la moyenne des erreurs d'apprentissage supervisé individuelles obtenues pour toutes les images de la deuxième base.

Bien entendu, suivant des modes de réalisation, les étapes d'entrainement peuvent être réalisées en même temps, par exemple sur deux copies identiques du réseau de neurones.

Suivant des modes de réalisation, la phase d'entrainement peut comprendre une étape de calcule d'une erreur agrégée en fonction des erreurs obtenues lors des entrainements auto-supervisé et supervisé.

Dans ce cas, l'étape de mise à jour peut être réalisée en fonction de ladite erreur agrégée.

L'erreur agrégée peut être une moyenne des erreurs d'apprentissage auto-supervisé et d'apprentissage supervisé.

Suivant des modes de réalisation, la phase d'auto-annotation peut appliquer plusieurs transformations à une image source de sorte à obtenir plusieurs images transformées à partir de ladite image source, chaque image transformée comportant une étiquette correspondant à la transformation.

Par exemple, la phase d'auto-annotation peut appliquer, de manière individuelle, quatre transformations différentes à une image source de sorte à obtenir quatre images transformées à partir d'une même image source. Dans ce cas, la première étiquette associée à chaque image transformée peut être un vecteur de quatre valeurs indiquant laquelle des transformations a été appliquée à l'image source. Par exemple, si la transformation appliquée à l'image source est la deuxième des transformations, la première étiquette associée à l'image ainsi obtenue peut être (0 ;1 ;0 ;0). Pour image transformée obtenue par application de la troisième transformation, la première étiquette associée à l'image ainsi obtenue peut être (0 ;0 ;1 ;0).

Ainsi, pour une image source, il peut être obtenu autant d'images transformées qu'il y a de transformations différentes.

Suivant des modes de réalisation, au moins une transformation appliquée à une image source peut être une rotation de l'image d'un angle prédéterminé.

Dans ce cas, la première étiquette peut alternativement indiquer la valeur de l'angle de rotation.

Suivant des exemples de réalisation, quatre rotations de quatre angles différentes peuvent être appliquées à une image source, de manière individuelle, pour obtenir quatre images transformées à partir d'une même image source. Par exemple, les quatre angles peuvent être : 0°, 90°, 180° et 270°. Dans ce cas, une image transformée obtenue par application d'une rotation de 180° peut avoir comme première étiquette (180°) ou (0;0;1;0).

Bien entendu au moins une transformation appliquée à une image source peut être autre chose qu'une rotation. Par exemple, par exemple au moins une transformation appliquée à une image source peut être une distorsion d'au moins une couleur de l'image, un cisaillement de l'image, un floutage de l'image, un bruitage de l'image, etc.

Suivant des modes de réalisation, au moins une image source peut être une image de la deuxième base d'images. Ainsi, chaque image transformée obtenue à partir de ladite image source comporte :

- la première étiquette ajoutée à ladite image lors de la phase d'autoannotation ; et
- la deuxième étiquette de ladite image source.

En effet, dans ce cas, l'image source étant une image de la deuxième base, elle comporte déjà une deuxième étiquette. Cette deuxième étiquette est conservée pour l'image transformée lors de la phase d'auto-annotation. La phase d'auto-annotation ajoute, en plus, une première étiquette à l'image transformée. Lors de l'étape d'apprentissage auto-supervisé, seule la première est utilisée même si l'image comporte aussi une deuxième étiquette.

Par contre, l'image transformée avec sa deuxième étiquette peut être utilisée pour enrichir la deuxième base d'images, éventuellement après adaptation de ladite deuxième étiquette en fonction de la transformation appliquée à l'image. Ainsi, la phase d'auto-annotation permet à la fois de créer la première base et d'enrichir la deuxième base, ce qui permet de disposer de plus d'images d'entrainement à utiliser lors de l'étape d'entrainement supervisé. Autrement dit, la phase d'auto-annotation peut réaliser une augmentation pour les images de la deuxième base tout en créant la première base.

Suivant des modes de réalisation préférés, pour au moins image annotée de la deuxième base, la deuxième étiquette peut être un masque de segmentation.

Un tel masque de segmentation indique pour chaque pixel de l'image la nature de l'objet, en particulier la classe de l'objet, auquel appartient ledit pixel. Ainsi, un tel masque de segmentation indique la position et la nature de chaque image se trouvant sur l'image.

L'étape de mise à jour peut réaliser une mise à jour d'un routage, et en particulier d'un coefficient de routage, ou encore d'une fonction de routage, de la sortie d'au moins un neurone d'une couche du réseau neuronal.

C'est cette mise à jour du routage qui permet de modifier l'architecture du réseau de neurones en fonction de l'image fournie en entrée du réseau de neurone.

Plus particulièrement, l'étape de mise à jour peut mettre à jour au moins un coefficient d'une fonction de routage, ou « gate function », pour au moins un neurone d'une couche du réseau neuronal. Une telle fonction est prévue pour générer une probabilité de routage pour chaque chemin possible en sortie dudit neurone, en fonction des données d'entrée qui lui sont fournies par un ou plusieurs neurones d'une couche précédente du réseau neuronal. La donnée de probabilité associée à chaque chemin est utilisée pour déterminer si ledit chemin est ouvert ou non, c'est-à-dire si ledit chemin doit être utilisé ou non, pour une image donnée en entrée du réseau neuronal. Ainsi, l'architecture du réseau neuronal s'adapte à chaque image donnée en entrée dudit réseau neuronal.

Alternativement, ou en plus, l'étape de mise à jour peut réaliser une mise à jour d'au moins d'un coefficient d'activation d'au moins un neurone du réseau neuronal.

Plus particulièrement, l'étape de mise à jour peut mettre à jour au moins un coefficient d'une fonction d'activation, ou « activation function », pour au moins un neurone du réseau neuronal d'une couche. Une telle fonction est prévue pour générer une valeur d'activation, en fonction des données d'entrée qui lui sont fournies par un ou plusieurs neurones d'une couche précédente du réseau neuronal. Cette donnée d'activation indique si le neurone doit être actif ou non, c'est à dite si le neurone doit traiter les données qui lui sont fournies, ou s'il doit rester transparent aux données et les transmettre à au moins un neurone d'une couche suivante.

Alternativement ou en plus, l'étape de mise à jour peut réaliser une mise à jour d'au moins un coefficient d'un neurone du réseau neuronal.

Un tel coefficient, également appelé poids, correspond au coefficient appliqué par ledit neurone à une donnée qui lui est fournie par un neurone d'une couche précédente, en vue de fournir une donnée de sortie.

Un tel coefficient peut être un coefficient d'une fonction de traitement que le neurone doit appliquer aux données qui lui sont fournies.

Le procédé selon l'invention peut en outre comprendre une étape d'évaluation de la performance du réseau neuronal sur une base de validation comprenant des images annotées, pour déterminer si ledit réseau neuronal est suffisamment entrainé ou non.

La base de validation comprend des images de validation qui sont différentes de la deuxième base.

L'étape de validation peut être réalisée à chaque itération de la phase d'entrainement.

Alternativement, l'étape de validation peut être réalisée à une fréquence différente, par exemple toutes les K itérations de la phase d'entrainement.

L'étape de validation peut mesurer une métrique de performance et la phase d'entrainement peut être réitérée tant que la métrique de performance n'a pas attient une valeur prédéterminée, ou un maximum ou encore un palier.

Par exemple, il peut être considéré que le réseau neuronal est suffisamment entrainé lorsque la métrique de performance a atteint un maximum et commence à décroitre. Suivant un autre exemple de réalisation, il peut être considéré que le réseau neuronal est suffisamment entrainé lorsque la métrique de performance a atteint un palier et ne croit pas pendant un nombre prédéterminé, par exemple 5, itérations de la phase d'entrainement.

Suivant un exemple de réalisation nullement limitatif, la métrique de validation peut être la mIoU, pour « mean Intersection over Union ».

En effet, la métrique qui est utilisée pour évaluer la performance du réseau neuronal peut être la métrique mIoU. La mIoU correspond à une moyenne des IuO, pour « Intersection over Union » en anglais, obtenues pour toutes les images de la base de validation. L'IuO pour chaque image est calculée comme étant :

$$IuO = ZI/ZU$$

avec :

- ZI : zone d'intersection, c'est-à-dire le nombre de pixels en commun, entre l'étiquette de l'image de validation et l'étiquette estimée par le réseau neuronal ; et
- ZI : zone d'union, c'est-à-dire la somme des pixels, de l'étiquette de l'image de validation et l'étiquette estimée par le réseau neuronal ;

étant entendu que l'étiquette est un masque de segmentation sémantique. Ensuite la moyenne sur l'ensemble des classes est calculée pour obtenir la mIoU.

Selon un autre aspect de l'invention, il est proposé un programme d'ordinateur comprenant des instructions exécutables qui, lorsqu'elles sont exécutées par un appareil informatique, mettent en en œuvre toutes les étapes du procédé selon l'invention.

Le programme d'ordinateur peut être en tout langage informatique, tel que par exemple en langage machine, en C, C++, JAVA, Python, etc.

Selon un autre aspect de l'invention, il est proposé un dispositif de prédiction de présence de poisson en un point maritime comprenant des moyens configurés pour mettre en œuvre toutes les étapes du procédé selon l'invention.

Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple en exécutant le programme d'ordinateur selon l'invention.

## Description des figures et modes de réalisation

D'autres avantages et caractéristiques apparaîtront à l'examen de la description détaillée de modes de réalisation nullement limitatifs, et des dessins annexés sur lesquels :

- la FIGURE 1 est une représentation schématique d'un premier exemple de réalisation non limitatif d'un procédé selon l'invention ;
- la FIGURE 2 est une représentation schématique d'un premier exemple de réalisation non limitatif d'un procédé selon l'invention ;
- les FIGURES 3a et 3b sont des représentations schématiques d'un exemple de réalisation non limitatif d'un réseau neuronal convolutif à architecture dynamique selon la présente invention ; et
- la FIGURE 4 est une représentation schématique d'un exemple de réalisation non limitatif d'un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

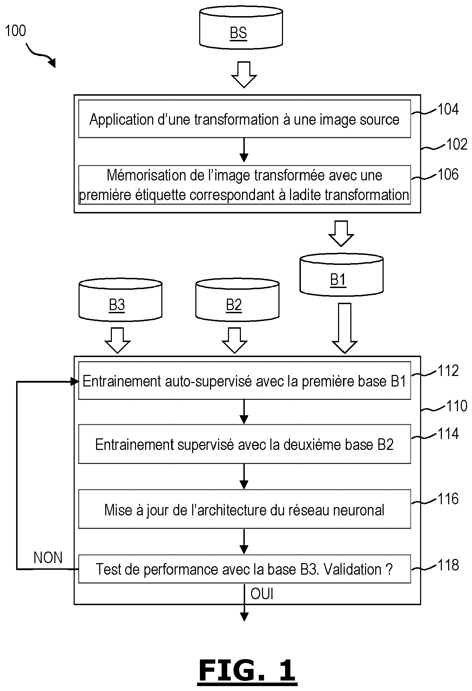

La FIGURE 1 est une représentation schématique d'un premier exemple de réalisation non limitatif d'un procédé selon la présente invention d'entrainement d'un réseau neuronal convolutif à apprentissage pour la segmentation sémantique d'une image.

Le procédé 100 de la FIGURE 1 peut être utilisé pour la segmentation sémantique de tous types d'images.

Le procédé 100 de la FIGURE 1 comprend une phase 102 d'autoannotation d'images pour constituer une base B1, dite première base, d'images auto-annotées, à partir d'une base BS, dite base source, d'image. Cette phase 102 a pour objectif d'obtenir, de manière tout à fait autonome et sans intervention d'un opérateur, d'une base d'images annotées.

La phase d'auto-annotation d'image comprend une étape 104 appliquant une transformation à une image de la base source BS. L'image transformée, appelée première image, est mémorisée, lors d'une étape 106, dans la première base B1 avec une étiquette, appelée première étiquette, correspondant à ladite transformation.

La transformation appliquée lors de l'étape 104 peut être choisie parmi une liste de N transformation(s), avec N≥1. Ainsi, la deuxième étiquette peut être un vecteur de dimension N indiquant la transformation appliquée à l'image transformée. Par exemple, lorsque N=4 et qu'une première image est obtenue par application de la troisième transformation, alors la première étiquette associée à cette première image transformée peut être (0 ;0 ;1 ;0).

Au moins une, et en particulier chaque, transformation peut être une rotation de l'image. Par exemple, lorsque N=4, alors la première transformation peut être une rotation de 0°, la deuxième transformation peut être une rotation de 90°, la troisième transformation peut être une rotation de 180° et la quatrième transformation peut être une rotation de 270°. Alternativement, au moins une transformation peut être une distorsion d'au moins une couleur de l'image, un cisaillement, un floutage, un bruitage, etc.

Pour chaque image de la base source BS, les étapes 104 et 106 peuvent être appliquées à tour de rôle pour chaque transformation de sorte à obtenir, à partir de ladite image, autant de premières images qu'il existe de transformations. Ainsi, si la base source comprend M images et que la transformation appliquée à l'étape 104 est choisie parmi N transformations, alors il est possible d'obtenir une première base d'images annotées comprenant NxM images.

Le procédé 100 comprend en outre une phase 110 d'entrainement du réseau neuronal convolutif avec :

- la première base d'images comprenant des premières images annotées, chacune, avec une première étiquette, et constituée lors de la phase 102 d'auto-annotation ; et
- une deuxième base d'images comprenant des deuxièmes images annotées, chacune, avec une deuxième étiquette.

En particulier, la deuxième étiquette de chaque deuxième image est un masque de segmentation sémantique.

En particulier, la phase d'entrainement 110 comprend une première étape d'entrainement réalisant un entrainement, dit auto-supervisé, lors de laquelle le réseau neuronal est entrainé avec la première base B1 constituée lors de la phase 102. L'étape 112 d'entrainement auto-supervisé 112 comprend les étapes suivantes :

- chaque image de la première base B1 est fournie au réseau neuronal convolutif pour obtenir une prédiction pour la première étiquette associée à ladite première image,
- pour chaque première image, une erreur d'apprentissage auto-supervisé individuelle est calculée en fonction de la première étiquette associée à ladite image et de la prédiction du réseau neuronale pour ladite première étiquette : l'erreur peut être une distance euclidienne ou cosinus entre la première étiquette et la sortie du réseau neuronal ; et
- une erreur d'apprentissage auto-supervisé est calculée pour l'ensemble des images de la première base B1 en fonction des erreurs d'apprentissage auto-supervisé individuelles obtenues pour chacune des images de la première base B1. Par exemple, l'erreur d'apprentissage auto-supervisé peut être égale à la moyenne des erreurs d'apprentissage auto-supervisé individuelles obtenues pour toutes les images de la première base B1.

La phase d'entrainement 110 comprend une étape 114 d'entrainement réalisant un entrainement supervisé lors de laquelle le réseau neuronal est entrainé avec la deuxième base B2. L'étape d'entrainement supervisé 114 comprend les étapes suivantes :

- chaque deuxième image de la deuxième base B1 est fournie au réseau neuronal convolutif pour obtenir une prédiction pour la deuxième étiquette associée à ladite deuxième image,
- pour chaque deuxième image, une erreur d'apprentissage supervisé individuelle est calculée en fonction de la deuxième étiquette associée à ladite deuxième image et de la prédiction du réseau neuronale pour ladite deuxième étiquette : l'erreur peut être une entropie croisée, ou « cross-entropy », entre la deuxième étiquette mémorisée avec la deuxième image et l'estimation de la deuxième étiquette par le réseau neuronal ; et
- une erreur d'apprentissage supervisé est calculée pour l'ensemble des deuxièmes images en fonction des erreurs d'apprentissage supervisé individuelles obtenues pour chacune des deuxièmes images de la deuxième base. Par exemple, l'erreur d'apprentissage supervisé peut être égale à la moyenne des erreurs d'apprentissage supervisé individuelles obtenues pour toutes les deuxièmes images de la deuxième base.

La phase d'entrainement 110 comprend ensuite une étape de calcul d'une erreur agrégée en fonction de l'erreur d'apprentissage auto-supervisé obtenue à l'étape 112 et l'erreur d'apprentissage supervisé obtenue à l'étape 114. Par exemple, l'erreur agrégée peut être une somme de ces erreurs.

Lors d'une étape 116 l'architecture du réseau neuronal est mise à jour.

En particulier, l'étape de mise à jour réalise une mise à jour d'un coefficient de routage, ou d'une fonction de routage, de la sortie d'au moins un neurone d'une couche. Par exemple, le coefficient de routage peut être généré par une ou plusieurs convolutions. La mise à jour du coefficient de routage peut être réalisée par mise à jour de ces convolutions via la rétropropagation de l'erreur. Cette mise à jour permet de modifier l'architecture du réseau neuronal en fonction de l'image fournie en entrée du réseau neuronal. Plus particulièrement, l'étape de mise à jour peut mettre à jour au moins un coefficient d'une fonction de routage, ou « gate function », pour au moins un neurone d'une couche du réseau neuronal. Une telle fonction est prévue pour générer une probabilité de routage pour chaque chemin possible en sortie dudit neurone, en fonction des données d'entrée qui lui sont fournies par un ou plusieurs neurones d'une couche précédente du réseau neuronal. La donnée de probabilité associée à chaque chemin est utilisée pour déterminer si ledit chemin est ouvert ou non, c'est-à-dire si ledit chemin doit être utilisé ou non. Ainsi, l'architecture du réseau neuronal s'adapte à chaque image donnée en entrée dudit réseau neuronal.

L'étape 116 de mise à jour peut en outre réaliser une mise à jour

- d'au moins d'un coefficient d'activation d'au moins un neurone, et/ou
- d'au moins un coefficient d'un neurone du réseau de neurones ; par exemple par rétropropagation de l'erreur.

Le procédé 100 comprend en outre une étape 118 d'évaluation de la performance du réseau neuronal sur une troisième base B3, dite base de validation, comprenant des images annotées avec une étiquette correspondant à un masque de segmentation sémantique, pour déterminer si le réseau de neurones est suffisamment entrainé ou non.

L'étape de validation 118 peut être réalisée à chaque itération de la phase d'entrainement 110. Alternativement, l'étape de validation 118 peut être réalisée à une fréquence différente, par exemple toutes les K itérations de la phase d'entrainement 110.

L'étape de validation 118 mesure une métrique de performance, du réseau neuronal. La métrique de performance peut par exemple être la métrique de performance connue sous le nom « mean Intersection over Union » en anglais, notée mIoU, c'est-à-dire une moyenne des IuO, pour « Intersection over Union » en anglais, obtenues pour toutes les images de la base de validation B3. L'IuO pour chaque image est calculée selon la relation suivante :

$$IuO = ZI/ZU$$

avec :

- ZI : zone d'intersection, c'est-à-dire le nombre de pixels en commun, entre l'étiquette de l'image de validation et la prédiction de segmentation fournie par le réseau neuronal, pour chaque classe d'objet ; et
- ZI : zone d'union, c'est-à-dire la somme des pixels, de l'étiquette de l'image de validation et de la prédiction de segmentation fournie par le réseau neuronal, pour chaque classe d'objet.

Ensuite la moyenne sur l'ensemble des classes est effectuée pour obtenir la mIoU pour l'ensemble des images de la base de validation.

Par exemple, il peut être considéré que le réseau neuronal convolutif est suffisamment entrainé lorsque la métrique de performance a atteint un maximum et commence à décroître. Suivant un autre exemple de réalisation, il peut être considéré que le réseau neuronal est suffisamment entrainé lorsque la métrique de performance a atteint un palier et ne croit pas pendant un nombre prédéterminé, par exemple 5, itérations de la phase d'entrainement 110.

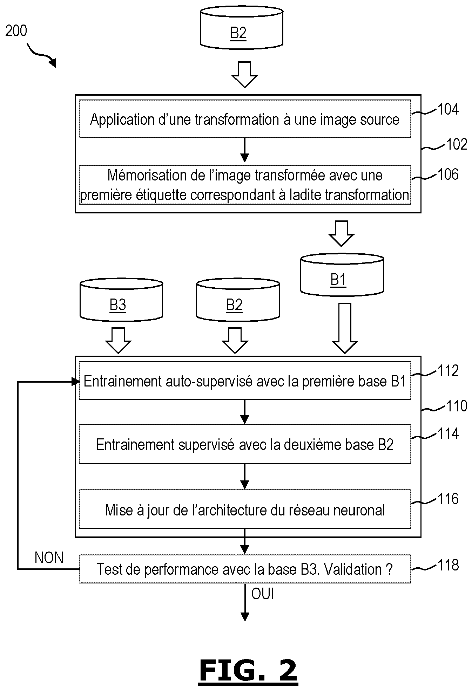

La FIGURE 2 est une représentation schématique d'un deuxième exemple de réalisation non limitatif d'un procédé selon la présente invention d'entrainement d'un réseau neuronal convolutif à apprentissage profond pour la segmentation sémantique d'images.

Le procédé 200 de la FIGURE 2 comprend toutes les étapes du procédé 100 de la FIGURE 1.

Le procédé 200 diffère du procédé 100 en ce que la première base d'images est obtenue en partant de la deuxième base d'images. Autrement dit, chaque première image est obtenue en appliquant une transformation à une deuxième image de la deuxième base.

Chaque image transformée obtenue à l'étape 104 peut être mémorisée comme première image en association avec la première étiquette correspondant à la transformation dans la première base B1.

Optionnellement, chaque image transformée obtenue à l'étape 104 peut en outre être mémorisée comme deuxième image en association avec la deuxième étiquette, éventuellement après adaptation de la deuxième étiquette en fonction de la transformation appliquée à la deuxième image, dans la deuxième base B2. Ainsi, la deuxième base B2est enrichie en parallèle de la création de la première base B1.

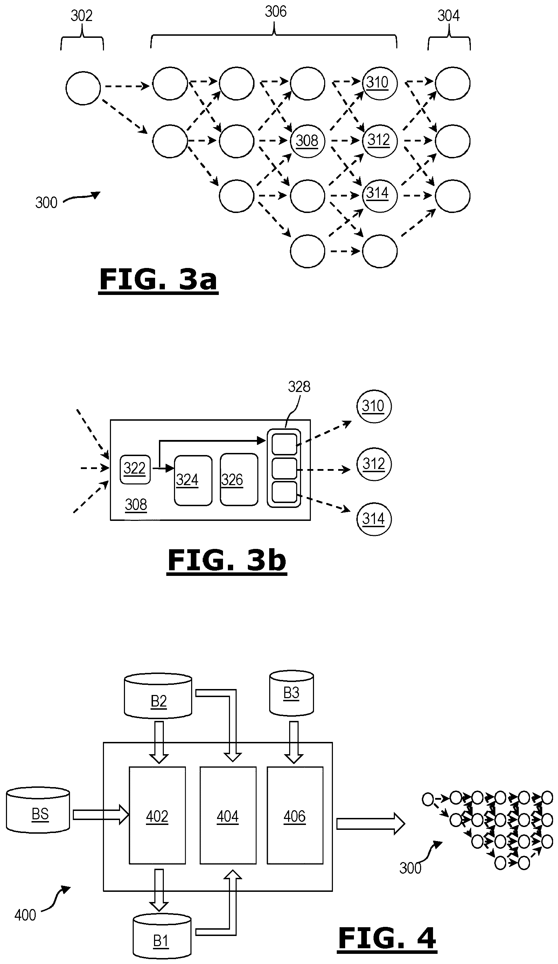

La FIGURE 3a est une représentation schématique d'un exemple de réalisation non limitatif d'un réseau de neuronal convolutif à architecture dynamique selon la présente invention.

Le réseau neuronal 300, représenté sur la FIGURE 3a, comprend une couche d'entrée 302. La couche d'entrée 302 peut comprendre un ou plusieurs neurones. Dans l'exemple représenté, la couche d'entrée comprend un seul neurone.

Le réseau neuronal 300 comprend une couche de décodage 306, également appelée couche de sortie. Dans l'exemple représenté, la couche de sortie 304 comprend, de manière non-limitative, trois neurones.

Le réseau neuronal 300 comprend en outre plusieurs couches d'encodage 306, également appelées couches cachées, entre la couche d'entrée 302 et la couche de sortie 304. Dans l'exemple représenté le réseau neuronal comprend quatre couches cachées. Chaque couche cachée 306 peut comprendre un nombre différent de neurones. Dans l'exemple représenté, chaque couche cachée 306 comprend 2, 3 ou 4 neurones dans le sens allant de la couche d'entrée 302 vers la couche de sortie 304 du réseau neuronal 300.

Dans le réseau neuronal 300 représenté, un neurone d'une couche est relié à un neurone de la couche suivant, sauf pour la couche de sortie 304. En d'autre termes, un neurone d'une couche reçoit la sortie d'un ou plusieurs neurones d'une couche précédente, sauf pour la couche d'entrée 302. Sur la FIGURE 3, toutes les routes possibles entre les neurones sont représentées avec des flèches en pointillées.

Ainsi, par exemple, il existe trois routes possible en sortie du neurone 308 :

- une route vers le neurone 310,
- une route vers le neurone 312, ey
- une route vers le neurone 314.

Bien entendu, la sortie du neurone 308 peut être dirigée vers l'une de ces routes ou une combinaison quelconque de ces routes.

Le procédé selon l'invention permet de déterminer l'architecture du réseau neuronal 300 avec un entrainement semi-supervisé tel que décrit plus haut, et en particulier en référence aux FIGURES 1 et 2.

La FIGURE 3b est une présentation schématique et nullement limitative du neurone 308.

Comme montré, le neurone 308 peut recevoir en entrée, potentiellement la sortie de plusieurs neurones. Le neurone 308 comprend, de manière optionnelle, une fonction d'agrégation 322 des données reçues de plusieurs neurones d'une couche précédente. Cette fonction d'agrégation est optionnelle, et n'est pas utilisée, lorsque le neurone 308 reçoit entrée la sortie d'un unique neurone d'une couche précédente.

La sortie de la fonction d'agrégation 322, ou l'entrée du neurone 308 lorsque la fonction d'agrégation 322 n'est pas utilisée, est donnée en entrée :

- d'une fonction d'activation 324 pour déterminer si le neurone 308 est actif ou non, et/ou
- d'une fonction de traitement 326, par exemple d'une fonction de convolution, que le neurone doit appliquer aux données qu'il reçoit lorsqu'il est activé.

Dans la présente invention, la sortie de la fonction d'agrégation 322, ou l'entrée du neurone 308 lorsque la fonction d'agrégation 322 n'est pas utilisée, est en outre donnée en entrée d'une fonction de routage 328. Cette fonction de routage 328 permet de déterminer le(s)quel(s) des chemins possibles en sortie du neurone 308 doit être utilisé en fonction :

- de la donnée qu'elle reçoit en entrée, et
- d'au moins un coefficient de routage déterminés lors de la phase d'entrainement.

On comprend donc que l'architecture du réseau neuronal 300 est dynamique en fonction de l'image donnée en entrée et que la sortie du neurone 308, de manière générale de tous les neurones (sauf des neurones de la couche de sortie) peut varier en fonction de l'image donnée en entrée du réseau de neurone.

La FIGURE 4 est une représentation schématique d'un exemple de réalisation non limitatif d'un dispositif selon la présente invention.

Le dispositif 400 de la FIGURE 4 peut être utilisé pour mettre en œuvre un procédé d'entrainement d'un réseau neuronal convolutif à architecture dynamique, et en particulier l'un quelconque des procédés 100 ou 200 décrits plus haut.

Le dispositif 400 comprend au moins un module 402 d'autoannotation d'images d'une base source BS, ou de la deuxième base B2, en vue d'obtenir une première base d'images B1 auto-annotées. Ce module est configuré pour appliquer une transformation à une image, et mémoriser l'image transformée ainsi obtenue avec une étiquette correspondant à ladite transformation. En particulier, le module d'auto-annotation 404 est configuré pour mettre en œuvre la phase 102 d'auto-annotation des procédés 100 et 200 des FIGURES 1 et 2.

Le dispositif 400 comprend au moins un module 404 d'entrainement du réseau neuronal architecture dynamique avec les bases d'images B1 et B2. Ce module est configuré pour :

- réaliser une étape d'entrainement auto-supervisé du réseau neuronal avec la base B1,
- réaliser une étape d'entrainement supervisé du réseau neuronal avec la base B2,
- déterminer une erreur agrégée pour les deux étapes d'entrainement, et
- mettre à jour un ou des coefficients du réseau neuronal.

En particulier, le module d'entrainement 404 est configuré pour mettre en œuvre la phase 110 d'entrainement des procédés 100 et 200 des FIGURES 1 et 2.

Le dispositif 400 comprend au moins un module 406 de validation des performances du réseau neuronal avec une troisième base d'images annotées B3. Ce module est configuré pour tester la performance du réseau neuronal sur la base B3 en mesurant une métrique de performance, telle que par exemple la métrique mIuO. En particulier, le module de validation 406 est configuré pour mettre en œuvre l'étape 118 de validation des procédés 100 et 200 des FIGURES 1 et 2.

Au moins un des modules 402-406 peut être un module indépendant des autres modules 402-406. Au moins deux des modules 402-406 peuvent être intégrés au sein d'un même module

Chaque module 402-406 peut être un module matériel (hardware) ou un module logiciel (software), tel qu'une application ou un programme d'ordinateur, exécuté par un composant électronique de type processeur, puce électronique, calculateur, etc.

Il est à noter qu'une architecture dynamique pour un réseau neuronal convolutif pour la segmentation sémantique d'image est connue de l'Homme du métier, par exemple du document Yanwei Li et al. : « Learning Dynamic Routing for Semantic Segmentation », accessible ici https://arxiv.org/pdf/2003.10401.pdf.

La présente invention permet d'entrainer le réseau neuronal convolutif à architecture dynamique pour la segmentation sémantique d'image et de déterminer l'architecture dudit réseau neuronal, par un entrainement semi-supervisé da sorte à rendre ledit entrainement moins chronophage et moins consommateur en ressources, et en particulier en images annotées.

Bien entendu l'invention n'est pas limitée aux exemples qui viennent d'être décrits. Par exemple, l'invention n'est pas limitée aux exemple de nombre de neurones, aux exemples de nombre de transformations, etc. donnés plus haut.

## Revendications

**1.** Procédé (100;200) d'entrainement d'un réseau neuronal convolutif à architecture dynamique (300) pour la segmentation sémantique d'images, ledit procédé (100;200) comprenant une phase (102) d'auto-annotation d'images, pour constituer une base (B1), dite première base, d'images auto-annotées, comprenant les étapes suivantes :

- application (104) d'au moins une transformation à au moins une image source, et
- ajout (106), à chaque image transformée ainsi obtenue, d'une étiquette, dite première étiquette, correspondant à ladite transformation ;

ledit procédé (100;200) comprenant au moins une itération d'une phase (110) d'entrainement dudit réseau neuronal (300) comprenant les étapes suivantes :

- entrainement (112), dit auto-supervisé, dudit réseau neuronal (300) avec la première base d'images (B1), fournissant une erreur, dite d'apprentissage auto-supervisé,
- entrainement (114) supervisé dudit réseau neuronal (300) avec une deuxième base d'images (B2) annotées avec une étiquette, dite deuxième étiquette, relative au contenu de ladite image, fournissant une erreur, dite d'apprentissage supervisé, et

- mise à jour (116) d'au moins paramètre dudit réseau neuronal en fonction des erreurs obtenues.

**2.** Procédé (100;200) selon la revendication précédente, **caractérisé en ce que** les étapes d'entrainement auto-supervisé (112) et d'entrainement supervisé (114) sont réalisées à tour de rôle.

**3.** Procédé (100;200) selon l'une quelconque des revendications précédentes, **caractérisé en ce que** la phase d'entrainement (110) comprend une étape de calcul d'une erreur agrégée en fonction des erreurs obtenues lors des entrainements auto-supervisé et supervisé, l'étape de mise à jour (116) étant réalisée en fonction de ladite erreur agrégée.

**4.** Procédé (100;200) selon l'une quelconque des revendications précédentes, **caractérisé en ce que** la phase d'auto-annotation (102) applique plusieurs transformations à une image source de sorte à obtenir plusieurs images transformées à partir de ladite image source, chaque image transformée comportant une étiquette correspondant à la transformation.

**5.** Procédé (100;200) selon l'une quelconque des revendications précédentes, **caractérisé en ce qu'**au moins une transformation appliquée à une image source est une rotation de l'image d'un angle prédéterminé.

**6.** Procédé (100;200) selon l'une quelconque des revendications précédentes, **caractérisé en ce qu'**au moins une image source est une image de la deuxième base d'images (B2), de sorte que chaque image transformée obtenue à partir de ladite image source comporte :

- la première étiquette ajoutée à ladite image lors de la phase d'autoannotation ; et
- la deuxième étiquette de ladite image source.

**7.** Procédé (100;200) selon l'une quelconque des revendications précédentes, **caractérisé en ce que**, pour au moins image annotée de la deuxième base, la deuxième étiquette est un masque de segmentation.

**8.** Procédé (100;200) selon l'une quelconque des revendications précédentes, **caractérisé en ce que** l'étape de mise à jour (116) réalise une mise à jour d'un routage, et en particulier d'un coefficient de routage, ou encore d'une fonction de routage, de la sortie d'au moins un neurone d'une couche du réseau neuronal.

**9.** Procédé (100;200) selon l'une quelconque des revendications précédentes, **caractérisé en ce que** l'étape de mise à jour (116) réalise une mise à jour d'au moins d'un coefficient d'activation d'au moins un neurone du réseau neuronal.

10. Procédé (100;200) selon l'une quelconque des revendications précédentes, **caractérisé en ce que** l'étape de mise à jour (116) réalise une mise à jour d'au moins un coefficient d'un neurone du réseau neuronal.

11. Procédé (100;200) selon l'une quelconque des revendications précédentes, **caractérisé en ce qu'**il comprend une étape (118) d'évaluation de la performance du réseau neuronal sur une base de validation (B3) comprenant des images annotées, pour déterminer si ledit réseau neuronal est suffisamment entrainé ou non.

12. Procédé (100;200) selon la revendication précédente, **caractérisé en ce que** la performance du réseau est mesurée par une métrique de validation mIoU (pour « mean Intersection over Union »).

13. Programme d'ordinateur comprenant des instructions exécutables qui, lorsqu'elles sont exécutées par un appareil informatique, mettent en en œuvre toutes les étapes du procédé (100;200) d'entrainement selon l'une quelconque des revendications précédentes.

14. Dispositif d'entrainement comprenant des moyens configurés pour mettre en œuvre toutes les étapes du procédé (100;200) selon l'une quelconque des revendications 1 à 12.

15. Réseau de neurones profond à architecture dynamique (300) pour la segmentation sémantique d'images, obtenu par le procédé (100;200) selon l'une quelconque des revendications 1 à 12.

100

BS

Application d'une transformation à une image source — 104

— 102

Mémorisation de l'image transformée avec une première étiquette correspondant à ladite transformation — 106

B3    B2    B1

Entrainement auto-supervisé avec la première base B1 — 112

— 110

Entrainement supervisé avec la deuxième base B2 — 114

Mise à jour de l'architecture du réseau neuronal — 116

NON    Test de performance avec la base B3. Validation ? — 118

OUI

## FIG. 1

200

B2

↓

**Application d'une transformation à une image source** ~104

102

**Mémorisation de l'image transformée avec une première étiquette correspondant à ladite transformation** ~106

↓

B3   B2   B1

↓   ↓   ↓

**Entrainement auto-supervisé avec la première base B1** ~112

110

**Entrainement supervisé avec la deuxième base B2** ~114

↓

**Mise à jour de l'architecture du réseau neuronal** ~116

↓

NON   **Test de performance avec la base B3. Validation ?** ~118

OUI

↓

# FIG. 2

302          306          304

**FIG. 3a**

300

328

322
324   326
308

310
312
314

**FIG. 3b**

B2          B3

BS          402   404   406

B1

300

**FIG. 4**

400

Europäisches
Patentamt

European
Patent Office

Office européen
des brevets

**RAPPORT DE RECHERCHE EUROPEENNE**

Numéro de la demande

EP 22 30 5268

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LOÏC PAULETTO ET AL: "Self Semi Supervised Neural Architecture Search for Semantic Segmentation", ARXIV.ORG, CORNELL UNIVERSITY LIBRARY, 201 OLIN LIBRARY CORNELL UNIVERSITY ITHACA, NY 14853, 1 février 2022 (2022-02-01), XP091148163, * abrégé; sections 1, 2.1, 2.2, 3.1, 4.1, 4.2, 5.1, 5.2, 5.3.1, 6 équation 8 * ----- | 1-15 | INV. G06N3/04 G06N3/08 G06T7/11 G06V10/774 G06V10/82 G06V20/70 |
| A,D | LI YANWEI ET AL: "Learning Dynamic Routing for Semantic Segmentation", 2020 IEEE/CVF CONFERENCE ON COMPUTER VISION AND PATTERN RECOGNITION (CVPR), IEEE, 13 juin 2020 (2020-06-13), pages 8550-8559, XP033805040, DOI: 10.1109/CVPR42600.2020.00858 [extrait le 2020-08-03] * sections 1, 3, 4 * ----- | 1-15 | |

**DOMAINES TECHNIQUES RECHERCHES (IPC)**

G06T
G06N

Le présent rapport a été établi pour toutes les revendications

| Lieu de la recherche | Date d'achèvement de la recherche | Examinateur |
|---|---|---|
| La Haye | 30 août 2022 | Tebbal Barracosa, B |

EPO FORM 1503 03.82 (P04C02)

**EP 4 242 921 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YANWEI LI et al.** *Learning Dynamic Routing for Semantic Segmentation, https://arxiv.org/pdf/2003.10401.pdf*